# FASCICULE DE BREVET EUROPEEN

(11) **EP 0 697 786 B1**
(45) Date de publication et mention de la délivrance du brevet: **29.09.1999**
(21) Numéro de dépôt: 95401891.7
(22) Date de dépôt: 14.08.1995
(51) Int. Cl.: H04N 5/225, G01S 3/786, B64G 1/36

(54) **Dispositif capteur terrestre pour satellite ou similaire, à matrice de détecteurs pyroélectriques**
Sensoreinrichtung zur Erderfassung für einen Satelliten oder Ähnliches mit einer pyroelektrischen Detektormatrix
Device for earth sensing for satellite or similar having an array of pyroelectrical detectors

(30) Priorité: 16.08.1994 FR 9410045
(43) Date de publication de la demande: 21.02.1996
(73) Titulaire: MATRA MARCONI SPACE FRANCE, 75116 Paris (FR)
(72) Inventeur: Tulet, Michel, F-31130 Balma (FR)
(74) Mandataire: Fort, Jacques

(56) Documents cités:
- EP-A- 0 083 240
- EP-A- 0 349 027
- EP-A- 0 496 568
- US-A- 4 072 863
- US-A- 4 191 967
- US-A- 5 055 689
- NEC RESEARCH AND DEVELOPMENT, no. 97, TOKYO,JAPAN, pages 35-41, XP 000149045 FUMIHO TAKAHASHI ET AL 'DEVELOPMENT OF PRECISION EARTH SENSOR FOR ETS-VI SATELLITE'

## Description

La présente invention concerne les dispositifs capteurs terrestres destinés à être placés sur des satellites ou véhicules spatiaux pour viser la terre. Ces dispositifs trouvent une application particulièrement importante dans les systèmes de commande d'attitude des satellites, destinés à pointer le satellite dans son ensemble ou des organes qu'il porte vers la terre ou une zone déterminée de la terre. Toutefois ils sont également utilisables dans d'autres buts, tels que la détection d'incendies de grande étendue.

Dans l'application principale, la fonction du dispositif capteur terrestre est de mesurer la position et l'orientation du satellite par rapport au centre du disque terrestre. Il fournit des informations permettant au système de déterminer les angles de dépointage en roulis (c'est-à-dire selon l'axe Nord-Sud) et en tangage (selon l'axe Est-Ouest) par rapport au centre de la terre.

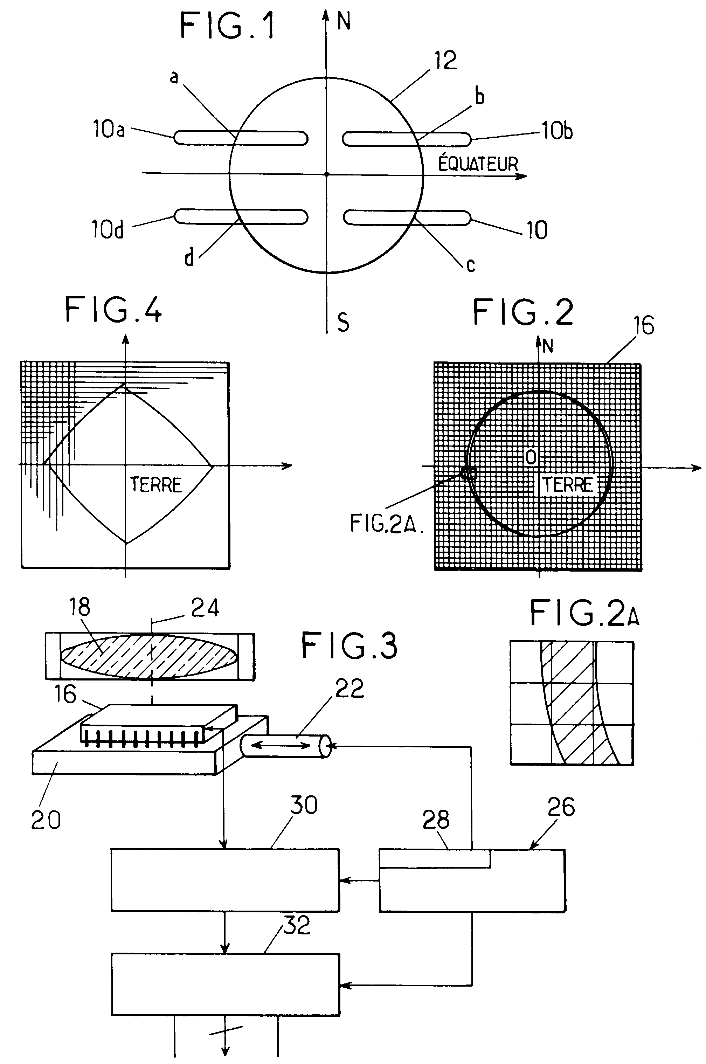

A l'heure actuelle, les dispositifs capteurs terrestres utilisent des éléments individuels, tels que des bolomètres, placés au plan focal d'une optique et ils comportent des moyens de balayage permettant de déterminer les positions des transitions espace-terre et terre-espace en plusieurs zones du disque terrestre. La plupart des dispositifs utilisés balayent, simultanément ou alternativement, des bandes de part et d'autre du plan équatorial. La figure 1 montre une position possible de telles bandes 10a, 10b, 10c et 10d par rapport à l'image 12 du disque terrestre, lorsque le satellite est dans son orientation de consigne. Trois seulement des quatre transitions a, b, c et d dont nécessaires. La quatrième transition fournit une redondance et permet de choisir le jeu de trois bandes le plus avantageux lorsque la position du soleil est telle qu'un des balayages est perturbé par la présence du soleil.

Un inconvénient grave de ces dispositifs connus est la nécessité de moyens de balayage ayant un mécanisme à organes mobiles. Un tel mécanisme est complexe et sa fiablilité est limitée, du fait qu'il doit fonctionner dans les conditions extrêmes rencontrées dans l'espace. Etant donné que la détection s'effectue sur des mono-élements, le temps d'intégration de la lumière infrarouge provenant d'un point déterminé ne représente qu'une très faible fraction du cycle de mesure.

On connaît par ailleurs (US-A-5055689) un capteur d'horizon terrestre ayant une optique de formation d'image de la terre, comprenant au moins deux télescopes formant chacun une image sur une barrette ou « linear array » d'éléments pyroélectriques, les barrettes ayant des orientations différentes. Les éléments pyroélectriques n'étant sensibles qu'à des variations de température, ils sont placés derrière un commutateur optique qui dirige alternativement vers eux l'image d'une scène à observer et l'image d'une scène uniforme de référence.

On connaît également (EP-A-0803240) un capteur dont l'élément sensible est une matrice IT-CCD. Pour augmenter la résolution, on fait vibrer le capteur de façon qu'il fournisse successivement les deux trames d'une image entrelacée.

La présente invention vise notamment à fournir un dispositif capteur terrestre répondant mieux que ceux antérieurement connus aux exigences de la pratique, notamment en ce qu'il n'utilise ni balayage, ni commutateurs.

Dans ce but, l'invention propose notamment un dispositif capteur terrestre pour satellite suivant la revendication 1.

L'invention sera mieux comprise à la lecture de la description qui suit de modes particuliers de réalisation, donnés à titre d'exemples non limitatifs. La description se réfère aux dessins qui l'accompagnent, dans lesquels :
- la figure 1, déjà mentionnée, est un schéma de principe montrant un mode classique de détection du dépointage d'un satellite géostationnaire par rapport à la terre ;
- la figure 2 montre schématiquement les zones du détecteur d'un dispositif suivant l'invention qui fournissent un signal en cas d'oscillation du détecteur suivant une direction parallèle au plan équatorial ;
- la figure 2A est une vue d'un détail de la figure 2 ;
- la figure 3 est un schéma de principe de moyens d'acquisition des signaux de sortie et de commande des oscillations ;
- la figure 4, similaire à la figure 2, montre l'image formée sur le détecteur dans le cas d'un satellite en orbite basse.

Un satellite placé sur une orbite géostationnaire voit la terre sous un angle de 17,5° environ. La terre constitue, vue de l'espace, approximativement un corps noir de température 300 K, tandis que le fond de ciel constitue un corps noir de température 4 K. Lorsque le dispositif utilise un réseau carré 16 de détecteurs pyroélectriques, l'image de la terre peut être en totalité formée sur lui par une optique simple 18 (figure 3). Dans la pratique, l'optique sera prévue pour que chaque médiane du détecteur 16 corresponde à un champ de vision d'environ 20° x 20°, comme indiqué sur la figure 2. Le détecteur proprement dit est placé sur une table 20 qu'un actionneur 22, constituant des moyens d'oscillation, permet de faire osciller dans son plan, c'est-à-dire orthogonalement à l'axe 24 de l'optique, avec une amplitude qui correspond à au moins un pas p de répartition des détecteurs pyroélectriques du réseau. L'actionneur 22 est avantageusement prévu pour provoquer une oscillation qui est parallèle au plan de l'équateur terrestre lorsque le pointage du satellite est correct. Dans la pratique, l'amplitude de l'oscillation ne dépassera pas 5p. Une valeur comprise entre p et 2,5p donnera en général de bons résultats.

Cette oscillation permet d'utiliser le fait que les détecteurs pyroélectriques ne sont sensibles qu'aux variations de température. En conséquence, un signal de sortie ne sera fourni que par les détecteurs pyroélectriques situés dans les zones en croissant sur la figure 2. Dans les zones proches des pôles, chaque point de la périphérie du disque terrestre ne provoquera un signal de sortie que sur un seul détecteur pyroélectrique. En revanche, plusieurs détecteurs fourniront un signal de sortie, plus ou moins intense suivant les durées relatives de vision du disque terrestre et de l'espace pour les zones à proximité de l'équateur. La figure 2A montre, à titre d'exemple, que dans une zone proche de l'équateur, chaque point de la périphérie du disque terrestre donnera naissance à des signaux provenant de deux détecteurs pyroélectriques par ligne.

Le pas p de répartition des détecteurs pyroélectriques du réseau est tel que les déplacements requis ne dépassent pas quelques centaines de micromètres. En conséquence,l'actionneur 22 peut être constitué par un élément déformable, n'ayant pas de composant mobile. Cet élément déformable peut notamment être un empilement de pastilles de matériau piézo-électrique, qui est très simple à mettre en oeuvre. Les efforts à exercer sont faibles, puisque seul le détecteur et son support mécanique sont à déplacer.

Tous les détecteurs pyroélectriques reçoivent simultanément le flux lumineux. Pour permettre une lecture séquentielle des informations ainsi acquises, le réseau de détecteurs est avantageusement couplé à une matrice d'éléments à transfert de charge, ou CCD, à lecture séquentielle ligne par ligne. Une autre solution consiste à utiliser un multiplexeur de sortie.

Le détecteur proprement dit est associé à une électronique qui peut être du genre montré en figure 3. Elle comporte un séquenceur 26 ayant un circuit de puissance de sortie 28 destiné à exciter, à une fréquence et avec une phase déterminée, l'actionneur 22. Le séquenceur 26 commande également une électronique 30 d'acquisition d'image, provoquant une lecture simultanée des signaux de sortie des différents transducteurs pyroélectriques élémentaires. Enfin, un circuit de traitement 32 a une constitution plus ou moins complexe suivant notamment la précision de localisation qui est souhaitée.

Dans un mode simple de réalisation, le circuit 32 compare le signal de sortie correspondant à chaque pixel, c'est-à-dire fourni par chaque détecteur pyroélectrique élémentaire, à un seuil et conserve uniquement les adresses des pixels qui à la fois :
- fournissent un signal de sortie supérieur au seuil,
- correspondent à des latitudes comprises entre deux valeurs limites, par exemple entre 30° et 60°.

A partir des valeurs ainsi conservées, le circuit de traitement 32 peut faire une moyenne permettant de calculer les angles de dépointage en roulis et en tangage par des algorithmes classiques.

Dans un mode de réalisation plus élaboré, les adresses et les niveaux de chacun des pixels pour lesquels le signal de sortie dépasse un seuil prédéfini sont conservés. Les valeurs mesurées pour chaque ligne de pixels sont numérisées et traitées pour déterminer les emplacements des transitions espace-terre et terre-espace, avec une résolution qui peut être inférieure à un pixel. Une fois toutes les valeurs de transition mémorisées, le circuit peut déterminer le centre du cercle pour lequel l'écart quadratique moyen avec les transitions est le plus faible.

Dans le cas d'un satellite en orbite basse, la terre est vue sous un diamètre apparent trop élevé pour que la totalité de l'image puisse être projetée sur le réseau. Pour un satellite habituel d'observation terrestre, l'angle sous lequel est vu le disque terrestre peut dépasser 110°. Dans ce cas, l'optique 18 est complétée par un éclateur de champ, pouvant être constitué par un tétraèdre réfléchissant ou un jeu de miroirs, permettant de ne projeter sur le réseau que des arcs de la périphérie du disque terrestre, typiquement à des latitudes comprises entre 30° et 45°, comme le montre la figure 4.

A titre d'exemple, un dispositif capteur terrestre pour satellite géostationnaire a été défini en utilisant un réseau de détecteurs pyroélectriques du type TCS THX7441A de la société Thomson. Ce réseau comportait 128 x 128 détecteurs pyroélectriques, répartis avec un pas de 85 µm, la taille de chaque pixel étant de 81 x 81 µm. Le champ de vision donné par l'optique était de 20° x 20°, ce qui correspondait, pour chaque pixel, à un champ angulaire de 0,157 x 0,157°. Le déplacement donné par l'actionneur piézo-électrique était de 80 à 200 micromètres. La fréquence d'acquisition de l'image fournie par le réseau était de 10 Hz. Le transfert du signal s'effectuait par l'intermédiaire d'un dispositif de lecture formé par une matrice de 512 x 512 éléments CCD.

Le circuit de traitement 32 était prévu pour identifier les pixels fournissant un signal dépassant un niveau de seuil et conserver et mémoriser l'adresse du pixel de transition espace-terre et celle du pixel de transition terre-espace, sur chaque ligne. Le circuit effectuait une recherche de valeur moyenne, permettant d'obtenir une précision meilleure que un quart de pixel sur chaque ligne.

A partir de ces données, les valeurs de dépointage en roulis et en tangage étaient calculées pour les cordes du disque terrestre ayant une longueur correspondant à une latitude comprise entre 45° et 55°.

Un tel traitement permet d'utiliser un circuit relativement simple, n'exigeant pas un calculateur programmé.

## Revendications

1. Dispositif capteur terrestre pour satellite ou véhicule spatial, comprenant :
- une optique (18) de formation d'image de la terre dans un plan focal, et
- un détecteur placé dans ledit plan focal, et constitué par un réseau à deux dimensions de détecteurs pyroélectriques (16),
- des moyens (22) d'oscillation du réseau dans le plan focal, orthogonalement à l'axe optique de l'optique de formation d'image, à une fréquence déterminée et avec une amplitude au moins égale au pas (p) de répartition des détecteurs, et
- des moyens (30,32) d'acquisition des signaux de sortie des détecteurs à ladite fréquence et de comparaison des signaux de sortie à un seuil.

2. Dispositif selon la revendication 1, dans lequel lesdits moyens d'oscillation (22) comportent au moins un transducteur piézo-électrique interposé entre un support (20) et ledit réseau.

3. Dispositif selon la revendication 1 ou 2, dans lequel ledit réseau est relié aux moyens d'acquisition par l'intermédiaire d'un dispositif à intégration et transfert de charge.

4. Dispositif selon la revendication 1, 2 ou 3, destiné à constituer un capteur d'horizon terrestre sur satellite géostationnaire, ledit dispositif comprenant une optique (18) de formation d'image qui est prévue pour former l'image de l'ensemble du disque terrestre sur le réseau.

5. Dispositif selon la revendication 1, 2 ou 3, destiné à constituer un capteur d'horizon terrestre sur un satellite en orbite basse, ledit dispositif comprenant une optique de formation d'image prévue pour former l'image de quatre arcs régulièrement répartis de la périphérie du disque terrestre.

6. Dispositif selon l'une quelconque des revendications précédentes, dans lequel les moyens d'oscillation (22) sont prévus pour donner une amplitude d'oscillation comprise entre un pas et 2,5 pas de répartition des détecteurs.

7. Dispositif selon l'une quelconque des revendications précédentes, comprenant des moyens de détermination et de mémorisation de l'emplacement des transitions espace-terre et terre-espace sur certaines au moins des lignes du réseau, avec une recherche de moyenne pour obtenir une précision meilleure que un quart de pixel sur chaque ligne.

8. Dispositif selon la revendication 7, dans lequel les dites lignes correspondent à des latitudes comprises entre 30° et 60°, avantageusement 45° et 55°.

9. Dispositif selon la revendication 7, dans lequel les dits moyens de détermination sont prévus pour mémoriser les adresses et les niveaux de chacun des pixels pour lesquels le signal de sortie dépasse un seuil prédéfini et effectuer une interpolation.

## Patentansprüche

1. Terrestrische Sensorvorrichtung für einen Satelliten oder ein Weltraumfahrzeug, die umfaßt:
- eine Optik (18) zur Formation eines Bildes der Erde in einer Fokalebene, und
- einen Detektor, der in der Fokalebene angeordnet ist und gebildet ist aus einem zweidimensionalen Netz von pyroelektrischen Detektoren (16), einer Einrichtung (22) zur Oszillation des Netzes innerhalb der Fokalebene, und zwar senkrecht zu der optischen Achse der Optik zur Bildformation, mit einer bestimmten Frequenz und mit einer Amplitude, die wenigstens genauso groß ist wie ein Verteilungsschritt (p) der Detektoren, und
- eine Einrichtung (30, 32) zum Erfassen der Ausgangssignale der Detektoren mit der Frequenz und zum Vergleichen der Ausgangssignale mit einem Schwellenwert.

2. Vorrichtung nach Anspruch 1, bei welcher die Oszillationseinrichtung wenigestens einen piezoelektrischen Wandler umfaßt, der zwischen einer Halterung (20) und dem Netz angeordnet ist.

3. Vorrichtung nach Anspruch 1 oder 2, bei der das Netz mit der Erfassungseinrichtung über eine Integrations- und Ladungsübertragungseinrichtung verbunden ist.

4. Vorrichtung nach den Ansprüchen 1, 2 oder 3, die dazu bestimmt ist, einen Sensor für den Erdhorizont in einem geostationären Satelliten zu bilden, wobei die Vorrichtung eine Optik (18) zur Bildformation umfaßt, die vorgesehen ist, das Bild der Gesamtheit der Erdscheibe auf dem Netz zu bilden.

5. Vorrichtung nach Anspruch 1, 2 oder 3, die dazu bestimmt ist, einen Sensor für den Erdhorizont in einem Satelliten mit niedriger Umlaufbahn zu bilden, wobei die Vorrichtung eine Optik zur Bildformation umfaßt, die vorgesehen ist, das Bild aus vier regelmäßig aufgeteilten Bogen des Randes der Erdscheibe zu bilden.

6. Vorrichtung nach einem der vorhergehenden Ansprüche, bei der die Oszillationsvorrichtung (22) vorgesehen ist, um eine Amplitude der Oszillation zu erzeugen, die zwischen einem und 2,5 Verteilungsschritten der Detektoren liegt.

7. Vorrichtung nach einem der vorhergehenden Ansprüche, mit Ermittlungs- und Speichereinrichtungen für den Ort der Übergänge Weltraum-Erde und Erde-Weltraum auf zumindest bestimmten Linien des Netzes, mit einer Suche eines Mittelwerts, um eine höhere Genauigkeit als ein Viertel eines Pixels auf jeder Linie zu erhalten.

8. Vorrichtuug nach Anspruch 7, bei der die Linien Breitengraden zwischen 30° und 60°, vorzugsweise 45° und 55° entsprechen.

9. Vorrichtung nach Anspruch 7, bei der die Ermittlungseinrichtung vorgesehen ist, um die Adressen und die Pegel von jedem der Pixel, für die das Ausgangssignal einen vorbestimmten Schwellenwert überschreitet, zu speichern und eine Interpolation durchzuführen.

## Claims

1. Terrestrial sensor device for satellite or spacecraft, comprising:
- a lens (18) for forming an image of the earth in a focal plane, and
- a detector placed in the said focal plane, and constituted by a two-dimensional array of pyroelectric detectors (16),
- means (22) for oscillating the array in the focal plane, orthogonally to the optical axis of the image-formation lens, at a determined frequency and with an amplitude at least equal to the distribution spacing (p) of the detectors, and
- means (30, 32) for acquisition of the output signals of the detectors at the said frequency and for comparison of the output signals with a threshold.

2. Device according to claim 1, wherein said oscillation means (22) include at least one piezoelectric transducer interposed between a support and the said array.

3. Device according to claim 1 or 2, wherein said array is connected to the acquisition means via an integration and charge-coupled device.

4. Device according to claim 1, 2 or 3, intended to constitute a terrestrial horizon sensor on a geostationary satellite, said device comprising image-formation lens (18) which is intended to form the image of the entire terrestrial disc on the array.

5. Device according to ciaim 1, 2, or 3, intended to constitute a terrestrial horizon sensor on a satellite in low orbit, said device comprising image-formation lens arranged to form the image of four regularly distributed arcs of the periphery of the terrestrial disc.

6. Device according to any one of the preceding claims, wherein the oscillation means (22) are intended to give an oscillation amplitude between one distribution spacing and 2.5 distribution spacings of the detectors.

7. Device according to any one of the preceding claims, comprising means for determining and storing the location of the space/earth and earth/space transitions on at least some of the lines of the array, with a means search for obtaining precision better than one quarter pixel on each line.

8. Device according to claim 7, wherein said lines correspond to latitudes of between 30° and 60°, advantageously 45° and 55°.

9. Device according to claim 7, wherein said determination means are intended to store the addresses and the levels of each of the pixels for which the output signal exceeds a predefined threshold and to perform interpolation.
